(19) **Europäisches Patentamt**

**European Patent Office**

**Office européen des brevets**

(11) Veröffentlichungsnummer: **0 548 873 B1**

(12) **EUROPÄISCHE PATENTSCHRIFT**

(45) Veröffentlichungstag der Patentschrift: **05.04.95**

(51) Int. Cl.⁶: **C08G 18/08**, C08G 18/36, C08G 18/80, C09D 175/06, C08G 18/42

(21) Anmeldenummer: **92121689.1**

(22) Anmeldetag: **21.12.92**

(54) **Wässriges Überzugsmittel, dessen Herstellung und Verwendung zur Bereitung von Füllerschichten.**

(30) Priorität: **23.12.91 DE 4142816**

(43) Veröffentlichungstag der Anmeldung:
**30.06.93 Patentblatt 93/26**

(45) Bekanntmachung des Hinweises auf die
Patenterteilung:
**05.04.95 Patentblatt 95/14**

(84) Benannte Vertragsstaaten:
**AT BE DE ES FR GB IT NL PT SE**

(56) Entgegenhaltungen:
**EP-A- 0 017 199**
**EP-A- 0 022 452**
**EP-A- 0 104 424**
**EP-A- 0 427 028**

**CHEMICAL ABSTRACTS, vol. 84, no. 10, M rz
1976, Columbus, Ohio, US; abstractno.
61332r, MURAYAMA ET AL 'WATER-SOLUBLE
ALKYD RESIN COATING COMPOSI-
TIONS'Seite 103 ;Spalte 2 ; & JP-A-50 139827**

(73) Patentinhaber: **Herberts Gesellschaft mit beschränkter Haftung**
**Christbusch 25**
**D-42285 Wuppertal (DE)**

(72) Erfinder: **Doebler, Klaus**
**An der Hoffnung 19**
**W-5608 Radevormwald (DE)**
Erfinder: **Georgiadis, Michael**
**Hügelstrasse 51**
**W-5600 Wuppertal 2 (DE)**
Erfinder: **Göldner, Wolfgang, Dr.**
**Bayernstrasse 15**
**W-5628 Heiligenhaus (DE)**
Erfinder: **Gräf, Knut**
**In der Marpe 35**
**W-4320 Hattingen (de)**

(74) Vertreter: **Türk, Gille, Hrabal, Leifert**
**Brucknerstrasse 20**
**D-40593 Düsseldorf (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein wäßriges Überzugsmittel, das insbesondere zur Beschichtung von Teilen in der Automobilindustrie zur Erzeugung von steinschlagfesten Überzügen, insbesondere steinschlagfesten Füllerschichten geeignet ist.

Die DE-OS 39 18 510 beschreibt ein Verfahren zur Herstellung steinschlagfester Beschichtungen durch Verwendung eines konventionellen Einbrennfüllers auf Basis eines Polyesters und eines speziellen blockierten Isocyanates.

Im Rahmen steigender Umweltschutzbestrebungen wurden Forderungen nach emissionsarmen Lacksystemen laut. Dies hat zur Entwicklung wasserverdünnbarer Einbrennfüller auf unterschiedlichster Bindemittelbasis geführt.

So beschreibt die EP-A-249 727 einen Hydrofüller auf Basis einer Kombination von Epoxidharz-Phosphor- bzw. -Phosphonsäureester, eines wasserverdünnbaren Polyesters gemäß AT-PS 328 587 sowie wasserverträglicher Melaminharze. Die DE-OS 40 00 748 beschreibt Hydrofüller auf Basis wasserverdünnbarer hydroxyfunktioneller Polyurethanharze gegebenenfalls weiterer Bindemittel und wasserverträglicher Aminharze. Die DE-OS 38 13 866 beschreibt Hydrofüller aus wasserverdünnbarem Polyurethanharz, wasserverdünnbarem epoxidharzmodifiziertem Polyester und gegebenenfalls wasserverdünnbarem Aminoplastharz. Die DE-OS 38 05 629 beschreibt ein wasserverdünnbares Überzugsmittel zur Herstellung steinschlagfester Überzüge auf Basis von carboxylgruppenhaltigen Polyestern oder Methacrylcopolymeren und wasserlöslichen blockierten Isocyanatprepolymeren sowie gegebenenfalls hinzutretendem wasserlöslichem Aminharz.

Alle in diesen Schriften genannten wasserverdünnbaren Einbrennfüller haben jedoch den Nachteil, daß sie nicht allen in der Praxis auftretenden Steinschlagbeanspruchungen genügen, und dementsprechend die Kriterien der unterschiedlichen Prüfspezifikationen der verschiedenen Automobilhersteller bezüglich der Steinschlagfestigkeit nicht erfüllen. Insbesondere bestehen allgemein noch Mängel in der Tieftemperatur-Steinschlagbeständigkeit und die bekannten Füller auf Wasserbasis sind daher noch stark verbesserungsbedürftig. Dies ist speziell von Interesse in Hinsicht auf Bestrebungen, den winterlichen Streumitteleinsatz von der üblichen Salzstreuung auf eine verstärkte Streuung mit Split oder Granulat umzustellen.

Außerdem weisen die bekannten Hydrofüller eine nicht ausreichende Überbrennstabilität auf, d. h. bei Überschreitungen der systemeigenen Einbrenntemperaturen verlieren die Füllerschichten ihr gewünschtes Eigenschaftsniveau.

Die Aufgabe der vorliegenden Erfindung besteht in der Bereitstellung stabiler wasserverdünnbarer Einbrennfüller, mit denen sich sowohl bei Umgebungstemperatur als auch bei Tieftemperatur, beispielsweise bei bis zu -20 °C hochsteinschlagfeste Überzüge erzeugen lassen. Darüber hinaus soll eine erhöhte Überbrennstabilität gegeben sein.

Diese Aufgabe wird überraschenderweise gelöst durch die Bereitstellung von wasserverdünnbaren Einbrennfüllern, deren Harzfestkörper

I. 50 bis 88 Gew.% eines durch vollständige oder teilweise Neutralisation mit Basen wasserlöslichen Reaktionsprodukts von

(A) 10 bis 80 Gew.%, vorzugsweise 15 bis 40 Gew.%, eines Polyurethanharzes, als eine Polycarboxylkomponente, welches Carboxylgruppen entsprechend einer Säurezahl von 70 bis 160 mg KOH/g und im Molekül mindestens eine endständige blockierte Isocyanatgruppe enthält, frei von Hydroxylgruppen und Fettsäureresten mit mehr als 12 C-Atomen ist, und eine Grenzviskositätszahl von 6,5 bis 12,0 ml/g (siehe z. B. DIN 1342), vorzugsweise von 8,0 bis 11,0 ml/g, gemessen in Dimethylformamid (DMF) bei 20 °C, aufweist, mit

(B) 20 bis 90 Gew.-%, vorzugsweise 60 bis 85 Gew.-% eines, gegebenenfalls urethanmodifizierten, Polyesterharzes als eine Polyhydroxylkomponente mit einer Hydroxylzahl von 50 bis 500 mg KOH/g, einer Säurezahl von weniger als 20 mg KOH/g und einer Grenzviskositätszahl von 8,0 bis 13,0 ml/g, vorzugsweise von 9,5 bis 12,0 ml/g, gemessen in DMF bei 20 °C, wobei das Reaktionsprodukt eine Grenzviskositätszahl von 13,5 bis 18,0 ml/g, vorzugsweise von 14,5 bis 16,5 ml/g, gemessen in DMF bei 20 °C, aufweist,

II. 10 bis 40 Gew.-% eines oder mehrerer nicht wasserverdünnbarer blockierter Polyisocyanatvernetzer, und

III. 2 bis 30 Gew.-% mindestens eines Aminharzes, bevorzugt ausgewählt aus der Gruppe Melamin- und/oder Benzoguanaminharze als zusätzliche Vernetzer, enthält, wobei sich die Gew.-% jeweils auf den Harzfestkörpergehalt beziehen, und die Summen der Prozentzahlen für die Zusammensetzung der Kombination aus (A) und (B) sowie aus (I), (II) und (III), bezogen auf den Harzfestkörper, jeweils 100 betragen.

2

EP 0 548 873 B1

Bei der Herstellung des Reaktionsprodukts (I) wird die Komponente (A) mit der Komponente (B) lösemittelfrei oder in nicht mit Isocyanatgruppen reaktiven organischen Lösemitteln bevorzugt bei einer Temperatur zwischen 90 und 170 °C und besonders bevorzugt bei einer Temperatur, die 10 bis 20 °C über der Abspaltungstemperatur des Blockierungsmittels für die endständigen Isocyanatgruppen der Komponente (A) liegt, bis zu einer Grenzviskositätszahl von 13,5 bis 18,0 ml/g, vorzugsweise von 14,5 bis 16,5 ml/g, gemessen in DMF bei 20 °C, umgesetzt, ohne daß dabei die Grenze der Löslichkeit in Wasser unterschritten wird (das Kondensationsprodukt muß wasserverdünnbar bleiben).

Anschließend werden die Carboxylgruppen des Reaktionsprodukts (I) teilweise oder vollständig mit einer anorganischen oder organischen Base neutralisiert, worauf mit dem bzw. den nicht wasserverdünnbaren blockierten Polyisocyanatvernetzern (II) bevorzugt bei 40 bis 100 °C vermischt wird, und mit Wasser auf einen für die weitere Verarbeitung geeigneten Feststoffgehalt verdünnt wird.

Der Zusatz des weiteren Vernetzers (III) kann vor oder bevorzugt nach der Verdünnung mit Wasser bzw. der Bildung der Dispersion aus den Komponenten (I) und (II) erfolgen.

Der wäßrige Einbrennfüller enthält darüberhinaus Wasser als Lösungsmittel, Pigmente, Füllstoffe sowie gegebenenfalls übliche lacktechnische Additive.

Die Erfindung betrifft weiterhin die Verwendung dieser wasserverdünnbaren Füller (Primer Surfacer) für die Automobillackierung und Verfahren zur Herstellung von steinschlagfesten Überzügen, insbesondere in der Kälte steinschlagfesten Überzügen.

Das als Polycarboxylkomponente (A) eingesetzte Polyurethanharz enthält als spezifische Ausgangsverbindung (zu seiner Herstellung) eine oder mehrere Dihydroxymonocarbonsäuren und weist Carboxylgruppen entsprechend einer Säurezahl von 70 bis 160 mg KOH/g und pro Molekül mindestens eine endständige blockierte Isocyanatgruppe auf. Definitionsgemäß enthält die Polycarboxylkomponente (A) weiterhin weder Hydroxylgruppen noch Reste von Fettsäuren mit mehr als 12 C-Atomen. Das Blockierungsmittel wird bei erhöhter Temperatur, d.h. bei der Reaktionstemperatur zur Verknüpfung mit der Polyhydroxylkomponente (B), abgespalten. Die Polycarboxylkomponente (A) ist für sich allein, ebenso wie das Reaktionsprodukt (I) aus (A) und (B), nach teilweiser oder vollständiger Neutralisation der Carboxylgruppen mit einer Base, vorzugsweis mit einem sekundären oder tertiären Alkyl- oder Alkanolamin, wasserverdünnbar.

Das Polyurethanharz wird in bekannter Weise durch Umsetzung einer Mischung aus einem oder mehreren Polyisocyanaten und einem oder mehreren mit Monohydroxylverbindungen und/oder Oximen, z.B. Butanonoxim, teilblockierten Polyisocyanaten mit der oder den Dihydroxymonocarbonsäuren und gegebenenfalls mit einem oder mehreren Polyolen erhalten, wobei die Mengenverhältnisse so gewählt werden, daß im Molekül der hydroxylgruppenfreien Polycarboxylkomponente (A) durchschnittlich mindestens eine endständig blockierte Isocyanatgruppe vorliegt.

Als Dihydroxymonocarbonsäure wird vorzugsweise Dimethylolpropionsäure eingesetzt. Prinzipiell sind auch andere Dihydroxymonocarbonsäuren geeignet.

Als Polyisocyanatverbindungen werden bevorzugt die handelsüblichen Diisocyanate, wie beispielsweise Toluylendiisocyanat, Isophorondiisocyanat oder Hexamethylendiisocyanat und gegebenenfalls auch geeignete Isocyanatprepolymere verwendet.

Zur Blockierung der freien NCO-Gruppen werden z. B. Monohydroxylverbindungen, insbesondere Monoalkohole wie 2-Ethylhexanol, Monoether von Glykolen und Polyoxyalkylendiolen oder Butanonoxim so ausgewählt, daß sie bei der Umsetzung der Polycarboxylkomponente (A) mit der Polyhydroxylkomponente (B) abgespalten werden, d. h. die Abspaltungstemperatur soll zwischen 80 und höchstens 160 °C liegen. Die Polycarboxylkomponente (A) hat eine Grenzviskositätszahl von 6,5 bis 12,0 ml/g, vorzugsweise von 8,0 bis 11,0 ml/g, gemessen in DMF bei 20 °C (siehe z. B. DIN 1342).

Als Polyhydroxylkomponente (B) werden filmbildende Polyesterharze eingesetzt, die durch eine Hydroxylzahl von 50 bis 500 mg KOH/g, eine Säurezahl von weniger als 20 mg KOH/g und eine Grenzviskositätszahl von 8,0 bis 13,0 ml/g, vorzugsweise von 9,5 bis 12,0 ml/g, gemessen in DMF bei 20 °C, gekennzeichnet sind. Die aus Polyolen und Polycarbonsäuren hergestellten Polyesterharze können gegebenenfalls Urethangruppen aufweisen und mit Monocarbonsäuren, die z. B. 5 bis 20 C-Atome enthalten, modifiziert sein. Der Anteil an Fettsäuren soll jedoch bevorzugt 15 Gew.% nicht übersteigen.

Die Komponenten (A) und (B) werden bei 90 bis 170 °C vorzugsweise bei einer Temperatur, die 10 bis 20 °C über der Abspaltungstemperatur des Blockierungsmittels für die endständigen Isocyanatgruppen in der Polycarboxylkomponente (A) liegt, bis zu einer Grenzviskositätszahl von 13,5 bis 18,0 ml/g, vorzugsweise von 14,5 bis 16,5 ml/g, gemessen in DMF bei 20 °C, reagiert, wobei zu beachten ist, daß das Reaktionsprodukt (I) nach einer Neutralisation der Carboxylgruppen noch einwandfrei wasserverdünnbar sein muß. Die Wasserverdünnbarkeit wird von der Anzahl der hydrophilen Gruppen, besonders der neutralisierbaren Gruppen, beeinflußt. Die Mengenverhältnisse liegen bei 10 bis 80 Gew.%, vorzugsweise 15 bis 40 Gew.%, für die Komponente (A) und bei 20 bis 90 Gew.%, vorzugsweise 60 bis 85 Gew.%, für

3

die Komponente (B), auf Feststoff bezogen, wobei die Summe der Prozentzahlen jeweils 100 beträgt, und sie werden so gewählt, daß das Reaktionsprodukt (I) eine Säurezahl von mindestens 25 mg KOH/g, vorzugsweise zwischen 30 und 50 mg KOH/g, aufweist.

Das Reaktionsprodukt (I) wird anschließend vor oder nach teilweiser oder vollständiger Neutralisation der Carboxylgruppen mittels anorganischer oder organischer Basen, jedoch vor Zugabe eines wesentlichen Anteils von Wasser, mit der für sich allein nicht wasserverdünnbaren Vernetzungskomponente (II) gemischt und mit Wasser auf einen, für die weitere Verarbeitung geeigneten, Feststoffgehalt verdünnt.

Durch die zusätzliche hydrolysestabile Verknüpfung der Polycarboxylkomponente (A) mit der Polyhydroxylkomponente (B) über die Urethangruppe, durch die Auswahl spezifischer Rohstoffe für die Polycarboxylkomponente (A) zur Verbesserung der Verträglichkeit des Reaktionsproduktes(I) mit dem oder den blockierten Polyisocyanaten (II) und durch die Zumischung von (II) vor der Zugabe eines wesentlichen Anteils von Wasser wird die Stabilität der mit den beschriebenen Bindemittelkombinationen formulierten erfindungsgemäßen Lacke wesentlich erhöht, was besonders für den Einsatz in industriellen Lackieranlagen mit Ringleitungssystemen von Bedeutung ist.

Als Basen für die Neutralisation der Carboxylgruppen des Reaktionsproduktes (I) werden vorzugsweise sekundäre oder tertiäre Alkyl- oder Alkanolamine verwendet.

Als Vernetzungskomponente (II) können z. B. handelsübliche blockierte Diisocyanate oder blockierte Polyisocyanate eingesetzt werden, die vorzugsweise geringe Anteile an organischen Lösemitteln aufweisen und auch als Gemisch mehrerer unterschiedlicher Komponenten (II) eingesetzt werden können.

Erfindungsgemäß werden als Vernetzer vom Typ (III) Aminoplastharze wie z. B. Melamin- oder Benzoguanaminharze eingesetzt. Bei diesen Substanzen handelt es sich z. B. um übliche Handelsprodukte. Sie können mit Wasser verdünnbar oder auch nicht mit Wasser verdünnbar sein.

Als Benzoguanaminharze werden beispielsweise voll- oder teilalkylierte methanol- und/oder butanoloveretherte Derivate, bevorzugt des Tetramethyloltyps, eingesetzt.

Als Melaminharze werden beispielsweise methanol- und/oder (iso)butanoloveretherte Derivate, bevorzugt vom Hexamethylolmelamin abgeleitet, eingesetzt. Besonders bevorzugt sind wasserlösliche teilalkylierte vom Hexamethylolmelamin abgeleitete Harze. Bevorzugter Veretherungsalkohol ist Methanol.

Die Aminoplastharze (III) werden allein oder im Gemisch erfindungsgemäß in Mengenanteilen von 2 - 30 Gew.% eingesetzt. Bevorzugt liegt der Mengenanteil von (III) bei 5 - 25, besonders bevorzugt bei 8 - 16 Gew.% von Melamin- und/oder Benzoguanaminharz.

Es bedarf für den Fachmann keiner näheren Ausführung, daß die Menge an Komponente (III) im fertigen Hydrofüller der im fertigen Hydrofüller vorhandenen Menge an Komponente (II) angepaßt werden kann, d. h. die Menge an Komponente (III) kann je nach der Menge der Komponente (II) bzw. deren chemischen Aufbau hinsichtlich Gehalt an latenten Isocyanatgruppen variiert werden. Dabei soll die Summe aus (II) und (III) 50 Gew.%, bezogen auf den gesamten Bindemittelgehalt, nicht überschreiten.

Überraschenderweise gelingt erfindungsgemäß auch die Einarbeitung von nicht-wasserverdünnbaren Vernetzern vom Typ (III) in die wäßrige Bindemittelmischung durch einfaches Vermischen.

In dem erfindungsgemäßen Hydrofüller können übliche anorganische und/oder organische Füllstoffe und/oder Pigmente eingesetzt werden. Als Füllstoffe können beispielsweise solche verwendet werden, die auf dem Gebiet der Herstellung von Füllerüberzugsmitteln üblich sind.

Es kann sich beispielsweise um anorganische Pigmente und Füllstoffe handeln, z. B. Ruß, Titandioxid, feindisperses Siliciumdioxid, Aluminiumsilikat (z. B. Kaolin), Magnesiumsilikat (z. B. Talkum), Calciumcarbonat (z. B. Kreide), Bariumsulfat (z. B. Schwerspat) und verschiedene Pigmente, wie z. B. Eisenoxidpigmente, organische Pigmente wie z. B. Phthalocyaninpigmente, organische Füllstoffe wie z. B. Polyamid- oder Polyacrylnitrilpulver, Korrosionsschutzpigmente wie z. B. Blei- oder Chromatverbindungen.

Als im erfindungsgemäßen Hydrofüller einsetzbare lacktechnische Additive seien beispielsweise rheologiebeeinflussende Mittel, Antiabsetzmittel, Verlaufsmittel, Antischaummittel, Entlüftungsmittel, Dispergierhilfen sowie Katalysatoren erwähnt. Diese dienen zum speziellen Einstellen von lack- oder applikationstechnischen Eigenschaften. Ebenso können gegebenenfalls haftungsverbessernde Additive, wie z. B. wasserverdünnbare Epoxidharz-modifizierte Alkydharze oder Epoxidharzphosphorsäureester, in den Überzugsmitteln zugesetzt werden.

Als Lösungsmittel sind übliche lacktechnische Lösungsmittel geeignet. Diese können von der Herstellung der Bindemittel herrühren. Es ist günstig, wenn die Lösungsmittel zumindest teilweise mit Wasser mischbar sind. Beispiele für solche Lösungsmittel sind Glykolether, z.B. Butylglykol, Ethoxypropanol, Butyldiglykol, Diethylenglykoldimethylether, Alkohole, z.B. Isopropanol, n-Butanol, Glykole, z.B. Ethylenglykol, N-Methylpyrrolidon sowie Ketone. Über die Auswahl der Lösungsmittel kann der Verlauf sowie die Viskosität des Überzugsmittels beeinflußt werden. Über den Siedepunkt der eingesetzten Lösungsmittel kann das Abdunstverhalten beeinflußt werden.

4

Das Pigment(Füllstoff)-Bindemittel-Gewichtsverhältnis beträgt je nach Pigment- bzw. Füllstoff-Kombination beispielsweise 0,5 : 1 bis 2,5 : 1, bevorzugt 0,8 : 1 bi 1,8 : 1. Der Festkörper des Überzugsmittels liegt bevorzugt bei 25 bis 60 Gew.-%, besonders bevorzugt bei 30 bis 55 Gew -%. Der Lösungsmittelgehalt liegt beispielsweise bei bis zu 15 Gew.%, bevorzugt bis zu 10 Gew.%, jeweils bezogen auf das wäßrige Überzugsmittel.

Es kann günstig sein, das Überzugsmittel durch Zusatz von Aminen oder Aminoalkoholen, bevorzugt sekundäre oder tertiäre Alkyl- oder Alkanolamine, auf einen pH-Wert von 7,8 - 8,8, bevorzugt 8,2 - 8,4 einzustellen.

Die Herstellung der erfindungsgemäßen wäßrigen Einbrennfüller erfolgt beispielsweise so, daß in geeigneten Dispergieraggregaten, wie z. B. einer Perlmühle, in dem Fachmann bekannter Weise Füllstoffe bzw. Pigmente gegebenenfalls unter Hinzufügen geeigneter Dispergierhilfsmittel und Entschäumer in einer Teilmenge der im fertigen Hydrofüller vorhandenen Menge an wäßriger Harzzusammensetzung, gebildet aus (I) und (II), dispergiert werden. Der Teilchendurchmesser der Pigmente und/oder Füllstoffe beträgt nach dem Dispergieren bevorzugt weniger als 15 $\mu$m.

Anschließend wird mit dem verbleibenden Mengenanteil der wäßrigen Harzzusammensetzung, gebildet aus (I) und (II), gemischt und danach werden die Komponente (III) sowie unter intensivem Vermischen gegebenenfalls weitere, im fertigen wäßrigen Einbrennfüller noch gewünschte Bestandteile, zugesetzt.

Danach kann mit Wasser die Viskosität eingestellt werden. Das fertige Überzugsmittel ist längere Zeit lagerfähig und zeigt keine wesentlichen Änderungen in der Viskosität oder Sedimentationsneigung. Zur Applikation kann mit Wasser gegebenenfalls eine geeignete niedrige Viskosität, z. B. zum Spritzen, eingestellt werden.

Das Überzugsmittel wird durch Rollen, Walzen oder Spritzen aufgetragen, bevorzugt über Spritzapplikationsverfahren. Beispiele dafür sind Druckluftspritzen, Airless-Spritzen oder ESTA-Hochrotationsspritzen. Als Substrat sind insbesondere Automobilkarossen oder Teile davon geeignet, sie können aus Metall oder Kunststoff bestehen. Metallteile können in üblicher Weise mit einer elektrophoretisch abgeschiedenen Korrosionsschutzgrundierung oder einer anderen üblichen Grundierungsschicht oder Zwischenschicht beschichtet sein. Diese wird z.B. bei Temperaturen über 150°C eingebrannt. Beispiele für derartige verwendbare Korrosionsschutzgrundierungen sind in den DE-A-36 15 810, 36 28 121, 38 23 731, 39 20 214, 39 40 782 sowie den EP-A-0 82 291, 209 857 und 234 395 beschrieben. Kunststoffsubstrate werden bevorzugt mit haftungsverbessernden Überzugsschichten oder mit Grundierungen auf Basis von zweikomponentigen Überzugsmitteln oder physikalisch trocknenden Überzugsmitteln versehen. Diese Überzüge können gegebenenfalls durch mechanische Arbeiten, z.B. Schleifen, behandelt sein.

Auf die vorbeschichteten Substrate wird das erfindungsgemäße Überzugsmittel aufgetragen. Nach einer kurzen Ablüftzeit, gegebenenfalls bei erhöhten Temperaturen bis 80°C, wird das Werkstück mit der Überzugsschicht bei Temperaturen zwischen 130 und 190°C, bevorzugt über 150°C, eingebrannt. Die Schichtdicke beträgt 15 - 120 $\mu$m, bevorzugt zwischen 25 und 60 $\mu$m. Nach dem Einbrennen kann die Oberfläche gegebenenfalls nachbehandelt werden, z. B. durch Schleifen, um eine glatte Oberfläche ohne Fehlstellen zu erzeugen. Danach kann auf dieser Füllerschicht die farb- und/oder effektgebende Lackschicht, z. B. ein Uni-Decklack oder ein Basislack, bevorzugt Wasserbasislack, aufgebracht werden.

Durch die Wahl des Aminoplastharzes (III) kann das mechanische Verhalten des Films beeinflußt werden. So ergeben Harze vom Benzoguanamintyp besonders kältesteinschlagresistente Füllerüberzüge, bei Verwendung von Harzen vom Melaminharztyp werden die Überzüge besonders gegen Steinschlagprüfungen nach Art eines Multisteinschlages stabil.

Bei wäßrigen Füllern mit den erfindungsgemäßen Bindemitteln können im Vergleich zu Produkten des Standes der Technik größere Anteile der Vernetzungskomponente mitverwendet werden. Beim Lagern der Lacke ist keine Entmischung der Lackkomponenten festzustellen. Durch die Möglichkeit, die Reaktivität der Lacke durch Abstimmen der Vernetzer (II) und (III) aufeinander in einem erweiterten Bereich zu beeinflussen, läßt sich gegebenenfalls auch die Zwischenschichthaftung der eingebrannten Filme verbessern. Durch die erfindungsgemäße Bindemittelmischung wird es besonders möglich, die Stabilität gegen Überbrennen, d. h. zu langes und zu hohes Erhitzen des Überzugsmittels, wie z. B. bei Stillstand von Lackieranlagen, zu verbessern.

Die erfindungsgemäße Verfahrensweise erlaubt die Herstellung farbiger oder unbunter deckender wäßriger Überzugsmittel, die zur Herstellung überbrennstabiler, steinschlagfester (besonders auch in der Kälte) Füllerschichten geeignet sind. Insbesondere erlaubt der Zusatz unterschiedlicher Art und Menge der Komponente (III), den unterschiedlichen Prüfspezifikationen bezüglich Steinschlagfestigkeit durch Variation nur dieses Bestandteils des Überzugsmittels Rechnung zu tragen.

Bei erfindungsgemäßem Vorgehen lassen sich optisch glatte, steinschlagfeste Mehrschichtlackierungen erzeugen, die den gestiegenen Anforderungen in der Automobilserienlackierung genügen.

Die nachfolgenden Beispiele erläutern die Erfindung.

Herstellungsbeispiele

## A) Herstellung der Polycarboxylkomponente A

In einem geeigneten Reaktionsgefäß wird eine Lösung von 945 Teilen (7 mol) Dimethylolpropionsäure in 1079 Teilen Diethylenglykoldimethylether (DGM) und 599 Teilen Methylisobutylketon (MIBK) vorgelegt. Innerhalb von 4 Stunden wird zu dieser Lösung bei 100°C eine Mischung aus 1,044 Teilen (6 mol) TDI und 528 Teilen (2 mol) eines mit Ethylenglykolmonoethylether halbblockierten TDI gleichzeitig zugegeben. Sobald alle NCO-Gruppen umgesetzt sind, wird der Ansatz mit einer Mischung aud DGM und MIBK (2 : 1) auf einen Feststoffgehalt von 60 % verdünnt. Die Komponente A weist eine Säurezahl von 140 mg KOH/g und eine Grenzviskositätszahl, gemessen in N,N-Dimethylformamid (DMF) bei 20°C, von 10,2 ml/g auf.

## B) Herstellung der Polyhydroxylkomponente B

In einem geeigneten Reaktionsgefäß werden 38 Teile (0,2 mol) Tripropylenglykol, 125 Teile (1,2 mol) Neopentylglykol, 28 Teile (0,1 mol) isomerisierte Linolsäure, 83 Teile (0,5 mol) Isophthalsäure und 58 Teile (0,3 mol) Trimellithsäureanhydrid bei 230°C bis zu einer Säurezahl von weniger als 4 mg KOH/g verestert. Die Viskosität einer 50%igen Losung in Ethylenglykolmonobutylether nach DIN 53211/20°C beträgt 165 Sekunden, die Grenzviskositätszahl, gemessen in N,N-Dimethylformamid bei 20°C, beträgt 10,5 ml/g.

## C) Herstellung der Bindemittelkomponente (I)

30 Teile der Komponente A und 70 Teile der Komponente B werden miteinander gemischt und das vorhandene Lösemittel während des Aufheizens auf die Reaktionstemperatur von 150 - 160°C unter Vakuum weitgehend entfernt. Die Reaktion erfolgt in ca. 90%iger Lösung in DGM. Die Temperatur von 150 - 160°C wird gehalten, bis eine Säurezahl von 35-39 mg KOH/g und eine Grenzviskositätszahl von 16,0, gemessen in N,N-Dimethylformamid bei 20°C, erreicht worden sind, wobei eine Probe nach Neutralisation mit Dimethylethanolamin einwandfrei wasserverdünnbar ist.

## D) Herstellung der wäßrigen Bindemittelmischung I + II

65 Teile der Komponente (I) werden bei 40 - 100°C mit 35 Teilen der Vernetzungskomponente (II), handelsübliches, mit Butanonoxim blockiertes Polyisocyanat (trimeres Hexamethylendiisocyanat mit Isocyanuratstruktur, z. B. Desmodur N 3390, Bayer) gemischt und mit Dimethylethanolamin auf einen Neutralisationsgrad von 90 % eingestellt. Anschließend wird mit deionisiertem Wasser auf einen Feststoffgehalt von 40 % verdünnt.

Vergleichsbeispiel 1:

**Vergleichsversuch A**

In 36 Teile der vorstehend unter D) erhaltenen 40%igen wäßrigen Bindemittelmischung werden 0,7 Teile Ruß, 1 Teil Titandioxid, 18,3 Teile Bariumsulfat und 2 Teile Talkum eingerührt und unter dem Dissolver intensiv vermischt. Danach wird diese Mischung in einer Perlmühle intensiv vermahlen und mit 18 Teilen der im vorhergehenden Beispiel D) erhaltenen 40%igen wäßrigen Zusammensetzung und 19,6 Teilen deionisiertem Wasser aufgelackt. Unter dem Dissolver wurden 3 Teile Butylglykol, 0,2 Teile Triethanolamin, 0,2 Teile eines polyethermodifizierten Dimethylpolysiloxancopolymeren (handelsübliches Verlaufsadditiv) und 1 Teil einer 10%igen Lösung eines Polysiloxancopolymeren (handelsüblicher Entschäumer) hinzugefügt und intensiv vermischt.

Herstellung von erfindungsgemäßen wäßrigen Einbrennfüllern

## Beispiel 1:

Es wird analog zu Vergleichsversuch A verfahren mit dem Unterschied, daß anstelle der 19,6 Teile deionisierten Wassers nur 17,1 Teile deionisiertes Wasser verwendet werden und zusätzlich 2,5 Teile einer 85%igen wäßrigen Lösung eines teilweise methanolveretherten Melaminharzes (Polymerisationsgrad: 2,3) im letzten Schritt unter dem Dissolver hinzugefügt werden.

**Beispiel 2:**

Es wird analog zu Beispiel 1 verfahren mit dem Unterschied, daß anstelle der 2,5 Teile des genannten Melaminharzes 2,5 Teile einer 80%igen butanolischen Lösung eines butanolveretherten Benzoguanaminharzes vom Tetramethyloltyp verwendet werden.

**Beispiel 3:**

Es wird wie in Beispiel 1 verfahren, jedoch werden anstelle der 2,5 Teile des in Beispiel 1 genannten Melaminharzes nur 1,25 Teile eingesetzt im Gemisch mit 1,25 Teilen des im Beispiel 2 genannten Benzoguanaminharzes.

Die in Vergleichsversuch A und in den Beispielen 1 bis 3 beschriebenen wäßrigen Füllerzusammensetzungen wurden mit deionisiertem Wasser auf Verarbeitungsviskosität eingestellt und auf mit für die Autoserienlackierung üblichem KTL (18 μm) vorbeschichtete, mit üblicher Vorbehandlung versehene, Karosseriestahlbleche aufgespritzt.

Nach 5 Minuten Ablüften wurde bei 160°C 20 Minuten eingebrannt. Anschließend wurde jeweils ein handelsüblicher für die Automobilserienlackierung geeigneter Einschichtdecklack in einer Trockenschichtdicke von 40 μm aufgetragen und 30 Minuten bei 130°C eingebrannt.

Die Herstellung der gleichen Lackaufbauten wurde völlig analog in einer zweiten Versuchsserie wiederholt mit dem Unterschied, daß die Füllerschicht nun 30 Minuten bei 190°C eingebrannt wurde. Die wäßrigen Füller erwiesen sich als überbrennstabil, denn man erhielt in beiden Versuchsserien jeweils Mehrschichtlackierungen mit den in folgender Tabelle aufgeführten Eigenschaften:

| Füller-Beispiel | Vergleichs-versuch A | 1 | 2 | 3 |
|---|---|---|---|---|
| Füllerschichtdicke | 35 µm | 36 µm | 35 µm | 37 µm |
| VDA-Steinschlag[1] | | | | |
| - Decklackhaftung | 3 | 1 | 2 - 3 | 2 |
| -Durchschläge | 3 | 1 | 2 - 3 | 2 |
| Steinschlag nach "SPLITT-Methode"[2] | | | | |
| Enthaftung +20°C | $10mm^2$ B/KTL | - | $6mm^2$ F/D1 | $8mm^2$ F/D1 |
| -20°C | $12mm^2$ B/KTL | - | $6mm^2$ F/D1 | $8mm^2$ B/KTL |
| Steinschlag nach "SPLITT-Methode"[3] | | | | |
| Enthaftung +20°C | $8mm^2$ B/KTL | - | $4mm^2$ F/D1 | $7mm^2$ F/D1 |
| -20°C | $10mm^2$ B/KTL | - | $4mm^2$ F/D1 | $7mm^2$ B/KTL |

[1] Prüfung mittels Steinschlag-Prüfgerät nach VDA (Fa. Erichsen, Modell 508) bei + 20°C mit 1 kg Stahlschrot (kantig, 4 - 5 mm), beschleunigt durch Druckluft von 3 bar.

Bewertung:

- Decklackhaftung (0 = keine Abplatzung vom Füller, 10 = vollständige Enthaftung),

- Durchschläge (0 = kein Durchschlag, 10 = sehr viele Durchschläge)

2) Prüfung mittels Steinschlagsimulationsgerät gemäß "Farbe und Lack", 8/1984, Seiten 646-653.

Prüfkörper: Kegel mit kugelförmiger Spitze von 2 mm Durchmesser und einer Masse von 0,5 g

Aufprallwinkel: 5 Grad

Aufprallgeschwindigkeit: 180 km/h

Prüftemperaturen: + 20 und - 20$^{\mathrm{o}}$C

Angegeben werden die weitgehend kreisrunden Schadenflächen in mm$^2$ und die Stelle im Lackaufbau, an der Enthaftung auftrat (B = Blech, KTL, F = Füller, Dl = Decklack).

3) Prüfung wie unter 2) beschrieben.

Prüfkörper: Kugel mit einer Masse von 0,15 g und einem Durchmesser von 2 mm.

Aufprallwinkel: 5 Grad

Aufprallgeschwindigkeit: 280 km/h

Die hier angegebenen Grenzviskositätszahlen entsprechen dem Staudinger-Index (Limiting Viscosity Number), wie z. B. in DIN 1342 definiert.

**Patentansprüche**

1. Wäßriges Überzugsmittel, enthaltend ein wasserverdünnbares Bindemittelgemisch aus
   I. 50 bis 88 Gew.-% eines durch vollständige oder teilweise Neutralisation mit Basen wasserlöslichen Reaktionsprodukts von
   (A) 10 bis 80 Gew.-% eines Polyurethanharzes als eine Polycarboxylkomponente mit einer Säurezahl von 70 bis 160 mg KOH/g und mindestens einer endständigen blockierten Isocyanatgruppe pro Molekül, das frei von freien Hydroxylgruppen und Fettsäureresten mit mehr als 12 C-Atomen ist und eine Grenzviskositätszahl von 6,5 bis 12,0 ml/g, gemessen in Dimethylformamid (DMF) bei 20 ° C hat, und
   (B) 20 bis 90 Gew.-% eines gegebenenfalls urethanmodifizierten Polyesterharzes als eine Polyhydroxylkomponente mit einer OH-Zahl von 50 bis 500 mg KOH/g, einer Säurezahl weniger als 20 mg KOH/g, einer Grenzviskositätszahl von 8,0 bis 13,0 ml/g, gemessen in DMF bei 20 ° C, wobei das Reaktionsprodukt eine Grenzviskositätszahl von 13,5 bis 18,0 ml/g, gemessen in DMF bei 20 ° C, aufweist,
   II. 10 bis 40 Gew.-% eines oder mehrerer nicht wasserverdünnbarer blockierter Polyisocyante als Vernetzer, und
   III. 2 bis 30 Gew.-% mindestens eines Aminharzes als weiteren
   Vernetzer, wobei sich die Gew.-% jeweils auf den Harzfestkörper beziehen.

2. Überzugsmittel nach Anspruch 1, dadurch gekennzeichnet, daß 15 - 40 Gew.% der Komponente (A) mit 85 - 60 Gew.% der Komponente (B) zu dem Produkt (I) umgesetzt sind.

3. Überzugsmittel nach Anspruch 1 oder 2, dadurch gekennzeichnet, daß das Reaktionsprodukt (I) eine Grenzviskositätszahl von 14,5 - 16,5 ml/g aufweist.

9

4. Überzugsmittel nach Anspruch 1 bis 3, dadurch gekennzeichnet, daß der Vernetzer (III) aus einem oder mehreren Melaminharzen besteht.

5. Überzugsmittel nach Anspruch 4, dadurch gekennzeichnet, daß die Melaminharze vom Hexamethyloltyp sind.

6. Überzugsmittel nach Anspruch 4 oder 5, dadurch gekennzeichnet, daß die Melaminharze teilalkylierte Melaminharze sind.

7. Überzugsmittel nach einem der Ansprüche 1 bis 3, dadurch gekennzeichnet, daß der Vernetzer (III) aus einem oder mehreren Benzoguanaminharzen besteht.

8. Überzugsmittel nach Anspruch 7, dadurch gekennzeichnet, daß die Benzoguanaminharze vom Tetramethyloltyp abgeleitet sind.

9. Überzugsmittel nach einem der Ansprüche 1 bis 8, dadurch gekennzeichnet, daß 5 - 25 Gew.% des Vernetzers (III) eingesetzt werden.

10. Verfahren zur Herstellung eines Überzugsmittels nach einem der Ansprüche 1 bis 9, dadurch gekennzeichnet, daß zur Herstellung des Reaktionsprodukts (I) die Komponente (A) mit der Komponente (B) bei einer Temperatur von 10 - 20°C oberhalb der Deblockierungstemperatur der blockierten Isocyanatgruppe von (A) umgesetzt wird.

11. Verfahren nach Anspruch 10, dadurch gekennzeichnet, daß der Vernetzer (III) zu den Komponenten (I) und (II) vor der Überführung in die Dispersionsphase gemischt wird.

12. Verfahren nach Anspruch 10, dadurch gekennzeichnet, daß der Vernetzer (III) in wasserlöslicher oder nicht-wasserlöslicher Form in eine wäßrige Dispersion der Komponenten (I) und (II) gemischt wird.

13. Verfahren zur Herstellung einer Mehrschichtlackierung, dadurch gekennzeichnet, daß auf ein mit einer Grundierung versehenes Substrat eine Füllerschicht aus einem Überzugsmittel nach einem der Ansprüche 1 bis 9 aufgetragen wird und nach dem Einbrennen eine Basis- oder Decklackschicht aufgebracht wird.

14. Verfahren zur Herstellung einer Mehrschichtlackierung nach Anspruch 13, dadurch gekennzeichnet, daß die zur Füllerschicht benachbarten Grundierungs- und/oder Lackschichten auf Basis wasserverdünnbarer Überzugsmittel hergestellt werden.

15. Verfahren zur Herstellung einer Mehrschichtlackierung nach Anspruch 13 oder 14, dadurch gekennzeichnet, daß eine farbige Füllerschicht eingesetzt wird.

16. Verwendung der Überzugsmittel nach einem der Ansprüche 1 bis 9 zur Herstellung von Füllerschichten in Mehrschichtlackierungen.

17. Verwendung nach Anspruch 16 bei der Kraftfahrzeuglackierung.

**Claims**

1. Aqueous coating composition containing a water-borne binder mixture prepared from
   I. 50 to 88 wt.% of a reaction product rendered water-soluble by complete or partial neutralisation with bases of
      (A) 10 to 80 wt.% of a polyurethane resin as a polycarboxyl component with an acid value of 70 to 160 mg KOH/g and at least one terminal blocked isocyanate group per molecule, which contains no hydroxyl groups and fatty acid residues with more than 12 C atoms, and has an intrinsic viscosity of 6.5 to 12.0 ml/g, measured in dimethylformamide (DMF) at 20°C and
      (B) 20 to 90 wt.% of an optionally urethane-modified polyester resin as a polyhydroxyl component with an OH value of 50 to 500 mg KOH/g, an acid value of less than 20 mg KOH/g, an intrinsic viscosity of 8.0 to 13.0 ml/g, measured in DMF at 20°C,

wherein the reaction product has an intrinsic viscosity of 13.5 to 18.0 ml/g, measured in DMF at 20°C,

II. 10 to 40 wt.% of one or more non-water-borne blocked polyisocyanates as crosslinking agents and

III. 2 to 30 wt.% of at least one amine resin as additional crosslinking agents,

wherein the weight percentages in each case relate to the resin solids content.

2. Coating composition according to claim 1, characterised in that 15 to 40 wt.% of component (A) are reacted with 85 to 60 wt.% of component (B).

3. Coating composition according to claim 1 or 2, characterised in that reaction product (I) has a limiting viscosity of 14.5 to 16.5 ml/g.

4. Coating composition according to claims 1 to 3, characterised in that crosslinking agent (III) consists of one or more melamine resins.

5. Coating composition according to claim 4, characterised in that the melamine resins are of the hexamethylol type.

6. Coating composition according to claim 4 or 5, characterised in that the melamine resins are partially alkylated melamine resins.

7. Coating composition according to one of claims 1 to 3, characterised in that crosslinking agent (III) consists of one or more benzoguanamine resins.

8. Coating composition according to claim 7, characterised in that the benzoguanamine resins are derived from the tetramethylol type.

9. Coating composition according to one of claims 1 to 8, characterised in that 5 to 25 wt.% of crosslinking agent (III) are used.

10. Process for the production of a coating composition according to one of claims 1 to 9, characterised in that component (A) is reacted with component (B) at a temperature of 10 to 20°C above the deblocking temperature of the blocked isocyanate group of (A).

11. Process according to claim 10, characterised in that crosslinking agent (III) is mixed into components (I) and (III) before conversion into the disperse phase.

12. Process according to claim 10, characterised in that crosslinking agent (III) is mixed in water-soluble or non-water-soluble form into an aqueous dispersion of components (I) and (II).

13. Process for the production of a multi-layer lacquer coating, characterised in that a filler layer of a coating composition according to one of claims 1 to 9 is applied to a substrate provided with a primer and, after baking, a base or topcoat lacquer layer is applied.

14. Process for the production of a multi-layer lacquer coating according to claim 13, characterised in that the primer and/or lacquer layers adjacent to the filler layer are based on water-borne coating compositions.

15. Process for the production of a multi-layer lacquer coating according to claim 13 or 14, characterised in that a coloured filler layer is used.

16. Use of the coating composition according to one of claims 1 to 9 for the production of filler layers in multi-layer lacquer coatings.

17. Use according to claim 16 in automotive lacquer coating.

**Revendications**

1. Composition aqueuse de revêtement contenant un mélange de liants diluables dans l'eau constitué

   I. de 50 à 88 % en poids d'un produit de réaction soluble dans l'eau par neutralisation totale ou partielle avec des bases, issu de la réaction de

   (A) 10 à 80 % en poids d'une résine polyuréthane, en tant que composant polycarboxylé, présentant un indice d'acide allant de 70 à 160 mg KOH/g et au moins un groupe isocyanate terminal bloqué par molécule, ne possédant pas de groupes hydroxyles libres et de restes d'acides gras ayant plus de 12 atomes de C et un indice de viscosité limite allant de 6,5 à 12,0 ml/g, mesuré dans le diméthylformamide (DMF) à 20°C, et de

   (B) 20 à 90 % en poids d'une résine polyesters éventuellement modifiée par des uréthanes, en tant que composant polyhydroxylé, présentant un indice OH, allant de 50 à 500 mg KOH/g, un indice d'acide inférieur à 20 mg KOH/g, un indice de viscosité limite allant de 8,0 à 13,0 ml/g, mesuré dans le DMF à 20°C, le produit de réaction présentant un indice de viscosité limite allant de 13,5 à 18,0 ml/g, mesuré dans le DMF à 20°C,

   II. de 10 à 40 % en poids d'un ou plusieurs polyisocyanate(s) bloqué(s) non diluable(s) dans l'eau, en tant qu'agent de réticulation, et

   III. de 2 à 30 % en poids d'au moins une résine amine, en tant qu'autre agent de réticulation,

   les % en poids se rapportant à la matière solide de la résine.

2. Composition de revêtement selon la revendication 1, caractérisée en ce que l'on fait réagir 15 à 40 % en poids du composant (A) avec 85 à 60 % en poids du composant (B) pour former le produit (I).

3. Composition de revêtement selon la revendication 1 ou 2, caractérisée en ce que le produit de réaction (I) présente un indice de viscosité limite compris entre 14,5 et 16,5 ml/g.

4. Composition de revêtement selon les revendications 1 à 3, caractérisée en ce que l'agent de réticulation (III) est constitué d'une ou plusieurs résine(s) de mélamine.

5. Composition de revêtement selon la revendication 4, caractérisée en ce que les résines de mélamine sont du type hexaméthylol.

6. Composition de revêtement selon la revendication 4 ou 5, caractérisée en ce que les résines de mélamine sont des résines de mélamine partiellement alkylée.

7. Composition de revêtement selon l'une des revendications 1 à 3, caractérisée en ce que l'agent de réticulation (III) est constitué d'une ou plusieurs résine(s) de benzoguanamine.

8. Composition de revêtement selon la revendication 7, caractérisée en ce que les résines de benzoguanamine sont dérivées du type tétraméthylol.

9. Composition de revêtement selon l'une des revendications 1 à 8, caractérisée en ce que l'on utilise 5 à 25 % en poids de l'agent de réticulation (III).

10. Procédé pour la préparation d'une composition de revêtement selon l'une des revendications 1 à 9, caractérisé en ce que pour la préparation du produit de réaction (I), on fait réagir le composant (A) avec le composant (B) à une température dépassant de 10 à 20°C, la température de déblocage du groupe isocyanate bloqué de (A).

11. Procédé selon la revendication 10, caractérisé en ce que l'agent de réticulation (III) est mélangé aux composants (I) et (II) avant le transfert dans la phase de dispersion.

12. Procède selon la revendication 10, caractérisé en ce que l'on mélange l'agent de réticulation (III) sous une forme soluble dans l'eau ou non soluble dans l'eau dans une dispersion aqueuse des composants (I) et (II).

13. Procédé pour la préparation d'un revêtement multicouche, caractérisé en ce que l'on applique sur un substrat comportant une couche de fond une couche de remplissage constituée d'une composition de revêtement selon l'une des revendications 1 à 9 et en ce que l'on applique après la cuisson une couche de base ou une couche d'un vernis de surface.

14. Procédé pour la préparation d'un revêtement multicouche selon la revendication 13, caractérisé en ce que les couches de fond et/ou de vernis voisines de la couche de remplissage sont préparées sur la base de compositions de revêtement diluables dans l'eau.

15. Procédé pour la préparation d'un revêtement multicouche selon la revendication 13 ou 14, caractérisé en ce que l'on utilise une couche de remplissage colorée.

16. Utilisation des compositions de revêtement selon l'une des revendications 1 à 9 pour la réalisation de couches de remplissage dans des revêtements multicouches.

17. Utilisation de compositions de revêtement selon la revendication 16 dans le revêtement de peinture des voitures automobiles.